# EUROPEAN PATENT APPLICATION

(11) **EP 1 788 491 A2**
(43) Date of publication of application: **23.05.2007**
(21) Application number: 06301147.2
(22) Date of filing: 15.11.2006
(51) Int. Cl.: G06F 15/80

(54) **Thread aware distributed software system for a multi-processor array**

(30) Priority: 16.11.2005 US 274302
(71) Applicant: Alcatel Lucent, 75008 Paris (FR)
(72) Inventor: Serghi, Laura Mihaela, Ottawa Ontario K1V 9Y8 (CA); McBride, Brian, Carp Ontario K0A 1L0 (CA); Wilson, David James, Carp Ontario K0A 1L0 (CA); Hanes, Gordon, Ottawa Ontario K2P OW6 (CA)
(74) Representative: Hervouet, Sylvie

(57) **Abstract**

A single chip architecture with multiple programmable processors is described. Each processor has a small and fast acting kernel-based operating system which has primitives for performing only fundamental functions of multi-processing. Many distributed threads may be executed simultaneously on many processors while allowing the device to be programmed as a single monolithic system.

## Description

### Field of the Invention

This invention relates to multiple, distributed processors in a single chip array and more particularly to a small, kernel-based, operating system for performing parallel processing of fundamental functions in multi-processors.

### Background

Embedded systems embody special purpose computer systems which, typically are completely encapsulated by the devices they control. Embedded systems and devices are becoming very popular and being used in ever increasing numbers in office and home environments. Examples of embedded systems range from portable music players to real time control of systems like communication networks. As embedded devices become more intelligent, multi-processor, distributed architectures are becoming the rule, rather than the exception.

The present invention provides a single chip architecture with multiple CPU cores which are programmable, instruction-set processors each running a, very fast, light-weight operating system (OS) image, in a microkernel (or exokernel) distributed architecture.

Kernel based operating systems usually implement some hardware abstraction to hide the underlying complexity from the operating system and to provide a clean and uniform interface to the hardware. There are four broad categories of kernel based operating systems, namely; monolithic kernels; microkernels; hybrid kernels; and exokernels. The present invention relates to microkernels and/or exokernels. Microkernels provide a small set of simple hardware abstractions and use applications called servers to provide more functionality. Exokernels provide minimal abstractions, allowing low-level hardware access. In exokernel systems, library operating systems provide the abstractions typically present in other kernel-based systems.

It is believed that there is no current solution which proposes on-chip architectures with distributed microkernels or exokernels running in multi-array processors with a microkernel (exokernel) running inside each processor.

It is acknowledged that each aspect of the invention on its own, i.e. multi-processors, micro-kernels and distributed processing, is not unique, however what is new is the way these aspects are combined into a unique and useful architecture. Although the term microkernel is used in the following discussion, the term nano or exo-kernel operating system may be more accurate to describe the main concept of the invention.

Prior to this invention, both, computation power and carrier-class availability, was offered in a different "package", in a well-known classical multi-shelf router architecture, where: computational power is increased by adding more processing cards or line cards to the shelf/chassis and carrier-class features (high availability, fault recovery, self-healing, etc) were obtained from running a distributed microkernel on each processor of a line card or processing card.

There are some similar technologies in re-configurable computing systems which implement a set of replicated tiles, each tile comprising a processing element and a small amount of memory coupled by a static two-dimensional interconnect. Each tile contains a simple RISC-like processor, a small amount of configurable logic and a portion of memory for instructions and data. Each tile has an associated programmable switch which connects the tiles in a wide-channel point-to-point interconnect. A proprietary compiler partitions instruction-level parallelism across the tiles and statically schedules communication over the interconnects. This prior art proposal can be viewed as a gigantic FPGA, since the low-level hardware details are exposed to facilitate compiler orchestration. However, there is no OS microkernel running on these tiles.

In another prior art design for an embedded system a central dispatcher is used rather than a distributed microkernel operating system as used in the present design.

### Summary of the Invention

The present invention seeks to combine the computing power of multi-processors and network processors with high level distributed programming techniques without separate code per processor while offering a single monolithic programming environment such that it looks likes a single CPU.

The challenge, then, is to leverage the increased computational horsepower of multiple core chips without incurring the large development costs while offering automated process, shared memory and thread management

Therefore in accordance with a first aspect of the present invention there is provided an array of microprocessors on an integrated circuit, each of the microprocessors having a kernel-based operating system, the operating system having software primitives for performing only fundamental functions of parallel processing.

In accordance with a second aspect of the invention there is provided a processing system comprising: an array of multiprocessors on an integrated circuit, each of the microprocessors having a kernel-based operating system for performing fundamental functions of parallel processing; an external memory and controller; and peripheral interfaces for communicating between the microprocessors and the external memory and controller.

In accordance with a further aspect of the invention there is provided a method of processing data packets in a communications system, the communications system employing an array of microprocessors on an integrated circuit, each microprocessor having a kernel-based operating system for performing fundamental parallel processing, the method comprising a coordinated execution of fundamental parallel processing functions performed by individual microprocessors of the array.

### Brief Description of the Drawings

The invention will now be described in greater detail with reference to the attached drawing which is a high level view the single chip architecture.

### Detailed Description of the Invention

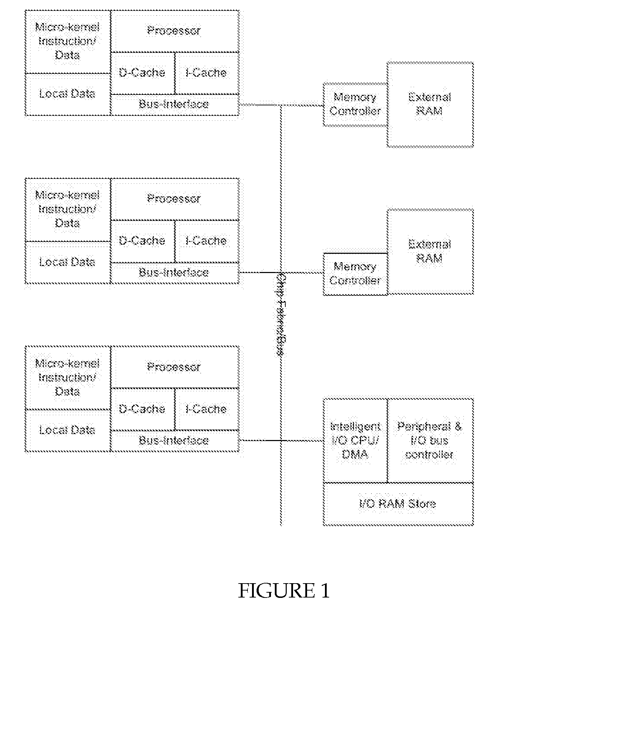

As shown in Figure 1 multiple processors are distributed on a single chip architecture. Associated with each microprocessor are local data storage, bus interface and data and instruction caches. Each processor has a kernel-based operating system. Additionally, off-chip components include memory controllers and external RAM.

The invention relates broadly to the chip architecture, hardware and software mechanisms which provide the multi-processor device with a microkernel based "operating system". The term operating system in the present invention refers to a simple hardware abstraction layer with facilities to support thread construction, communication and hardware interfaces.

This architecture strives towards a more generalized hardware and software solution, superior in performance than general purpose architectures, and general enough to accommodate all types of software applications and rapid application development. The software system appears as a single image operating systems with the distributed computing and multiple processor technology hidden from the programmer.

This invention is not about parallel processing (i.e. breaking up a single task into many parts) but multi-processing (as would be useful for processing several different packets at the same time). It is about allowing many distributed threads to execute simultaneously on many small CPUs each with a small kernel while allowing the device to be programmed as a single monolithic system. There is no central dispatch/schedule for the threads, it is done in a cooperative, peer to peer manner.

The aforementioned prior art NPUs do not have this capability and do not run small O/Ss on their cores (i.e. there is no user mode instruction space and all the programs reside in the data store). In the present invention, the small O/S is the function that enables the threads to run, stop, initialize, replicate and move transparently, the thread code is read from the data store so as to not limit the applications the device can execute.

The smallOS kernel that is contemplated by the present invention is a software microkernel that is less than 8K, is fast and it contains only the most fundamental software primitives for distributed processing: process/thread library, scheduling, message-passing services, timers, signals, clocks, interrupt handler, semaphores, task discovery and delivery and code load. All other OS components, like drivers, file systems, protocol stacks, etc are loaded if necessary at runtime and are run as daemons/servers in the user space, outside of the microkernel, as separate memory-protected processes. The microkernels in the chip co-operatively decide who will run which of these applications & user programs.

Each processor in the chip, as shown in Figure 1, executes the mic rokernel code independent of the others from a local instruction and data memory store. The microkernel has fixed data resources so the data memory is of a small fixed size. Message passing and other distributed computation mechanisms are used to make the device perform its functions while hiding the parallelism from the programmer. The processors share a number of resources through cooperative resource sharing algorithms in software with hardware support.

Each microprocessor identifies, through messaging, that it has finished a processing task, and potentially has a next task to process A peer processor will receive and identify that it is capable of continuing the processing task and accepts the stack for the current data. Since the initial processor has finished processing, it will begin listening to messages for the next task it will undertake. Each processor does not need to accept all tasks, since distribution of processing effort can be decided at the programming level, or at a resource management level. If a processor is changing tasks, it may then load the new application code by requesting to a library management message a code block.

The multi-array processors architecture doesn't preclude the use of an exokernel in each of the CPUs, instead of a microkernel image. Exokernels are an attempt to drive the Microkernel concept to the extreme, making the kernel do next to nothing except multiplexing the hardware.

In the exokernel approach the kernel simply exports the hardware resources in a secure way, through a low level interface. The high level abstractions and functionalities are provided by library operating systems implemented at user-level. This architecture allows application-specific customization of the operating system services by extending, specializing or replacing libraries, resulting in performance benefits.

The architecture of the invention brings together benefits from both microkernel (exokernel) operating systems and multiple processor devices to provide new and useful results. These include the following:
1. Large scale compute power and multi-processing. By increasing the number of processors, it brings enormous computing power and, even more importantly, a large scale data communication and data storage, that is not possible with a monolithic memory, a monolithic operating system and a single processor architecture.
2. Self-healing. A microkernel on each processor provides the capability for the chip to bring software components back up at runtime, without interfering with the microkernel or other applications, thereby allowing building carrier-class, high available, re-startable systems.
3. Reliability. The chip can run non-stop and new OS modules upgraded, removed and installed at run-time.
4. Scalability. The system scales well because the microkernel based operating system hides the details of how many processors are running underneath the applications, therefore supporting single chips of arbitrary numbers of cores and multiple chips with the same software image. The number of processors doing any specific task can be increased or decreased depending on the traffic and processing load requirements. If a series of data packets require extra lookup processing, microprocessors can load new applications to speed up the overall processing rates as required.
5. General purpose processing. As networks nodes require more intelligence it becomes prohibitively expensive to develop the complex applications required. Network nodes need a system such as this that can offer both the performance and reliability with a general purpose development environment, vs the purpose built and custom environments today.
6. Distributed processing. Any resource or process on one processor can be moved/spawned onto another processor depending on the resources availability. Any resource or process can be accessed from any location (processor) on the chip, without having to write code connectors to enable resources to communicate.
7. Solves bandwidth bottlenecks that appear in single processor single sequential instruction stream architectures.
8. Allows the same legacy single image programming paradigm to be applied to emerging multiple processor arrays.

The present invention generalizes previous efforts in microprocessor chip architecture towards multiprocessors on chip architectures instead of chip-tiled microprocessors design.

The multiprocessors approach offers a more general hardware system design and software design methodology, suitable for leve raging new and legacy software applications programmed with high level languages without the need for specialized programming skills, than hardware based systems.

The invention provides a solution for building compute intensive systems, such as next generation routers, servers, etc.

Also this is the starting point for building distributed switch/router system architectures for next generation distributed networks. It's a perfect approach for multi-services boxes, where very different software applications (routing, MPLS, BRAS, session border controllers, etc) are all supported on the same chip.

While particular embodiments of the invention have been described and illustrated it will be apparent to one skilled in the art that numerous changes can be made without departing from the basic concept. It is to be understood, however, that such changes will fall within the full scope of the invention as defined by the appended claims.

## Claims

1. An array of microprocessors on an integrated circuit, each of said microprocessors having a kernel-based operating system, the operating system having software primitives for performing fundamental functions of multi-processing.

2. The array of microprocessors as defined in claim 1 wherein the kernel-based operating system is a microkernel.

3. The array of microprocessors as defined in claim 1 wherein the kernel-based operating system is an exokernel.

4. The array of microprocessors as defined in claim 1 wherein the fundamental functions of the kernel include process/thread library functions.

5. The array of microprocessors as defined in claim 1 wherein the fundamental functions of the kernel include scheduling functions.

6. The array of microprocessors as defined in claim 1 wherein the fundamental functions of the kernel include message-passing functions.

7. The array of microprocessors as defined in claim 1 wherein the fundamental functions of the kernel include timer functions.

8. The array of microprocessors as defined in claim 1 wherein the fundamental functions of the kernel include signaling functions.

9. The array of microprocessors as defined in claim 1 wherein the fundamental functions of the kernel include clock functions.

10. The array of microprocessors as defined in claim 1 wherein the fundamental functions include interrupt handler functions.

11. The array of microprocessors as defined in claim 1 wherein the fundamental functions include semaphore functions.

12. The array of microprocessors as defined in claim 1 wherein the fundamental functions include discovery and delivery functions.

13. The array of microprocessors as defined in claim 1 wherein the fundamental functions include code load functionality.

14. The array of microprocessors as defined in claim 1 wherein each microprocessor includes local storage and cache for local instructions and data.

15. A processing system comprising:
an array of multiprocessors on an integrated circuit, each of the microprocessors having a kernel-based operating system for performing fundamental functions of multi-processing;
an external memory and controller; and
peripheral interfaces for communicating between the microprocessors and the external memory and controller.

16. A method of processing data packets in a communications system, the communications system employing an array of microprocessors on an integrated circuit, each microprocessor having a kernel-based operating system for performing fundamental parallel processing, the method comprising a coordinated execution of fundamental parallel processing functions performed by individual microprocessors of the array.

17. The method as defined in claim 16 wherein each microprocessor of the array identifies, through messaging, when it has finished processing a task.

18. The method as defined in claim 17 wherein when each microprocessor has finished processing a task it will listen for messages which will identify the next task it will undertake.

19. The method as defined in claim 18 wherein distribution of tasks for processing is decided at a programming level.

20. The method as defined in claim 18 wherein distribution of tasks for processing is decided at a resource management level.

21. The method as defined in claim 18 wherein when a microprocessor is changing tasks it will loada new application code by requesting a code block from a library management entity.
